# EUROPEAN PATENT APPLICATION

(11) **EP 1 696 320 A1**
(43) Date of publication of application: **30.08.2006**
(21) Application number: 05004150.8
(22) Date of filing: 25.02.2005
(51) Int. Cl.: G06F 9/445

(54) **Electronic device with an embedded linux application system**

(71) Applicant: Moxa Technologies Co., Ltd., Shing Tien City, Taipei Hsien (TW)
(72) Inventor: Yu, Sheng-Yi, Taipei City (TW)
(74) Representative: Glawe, Delfs, Moll

(57) **Abstract**

The present invention discloses an electronic device with an embedded Linux application system, and the electronic device comprises a microprocessor for executing a Linux operating system core and a root file system, and the electronic device installs the Linux operating system core and the root file system, such that when a user wants to develop an embedded Linux application program, the user just needs to design the required application program only. If there is a problem occurred when using the electronic device, the user just needs to check the application program without the need of considering the Linux operating system core and the root file system, and thus the present invention can save lots of time and costs for users.

## Description

### BACKGROUND OF THE INVENTION

### 1. Field of the Invention:

The present invention relates to an electronic device with an embedded Linux application system, and more particularly to an electronic device that installs a Linux operating system core and a root file system therein.

### 2. Description of the Related Art:

As a device driver acts as a bridge between an operating system and a hardware device, the device driver is designed for an easy communication between the components in an operating system and a hardware device. However, electronic device manufacturers would not specially develop a device driver for an operating system which is not very popular, and thus users have to code their required device driver form scratch. Coding a device driver usually takes a long time, and the quality of the coded device driver affects the performance of developing other components by the device driver.

In the past, when a user developed an embedded Linux application program, the user generally started from the hardware of the electronic device to create an embedded Linux operating system core first and then created a root file system. However it is necessary to select and open the required root file system, add the required system instructions into the root file system, and select to use the required file system during the development stage. The foregoing process consumes lots of user's time; furthermore, after each system is selected, it is necessary to combine the basic operating system with the file system into a firmware and burn the firmware into a read only memory in order to develop an application program.

### SUMMARY OF THE INVENTION

The present invention has been accomplished under the circumstances in view. Therefore, it is a primary objective of the present invention to install a Linux operating system core and a root file system into an electronic device in advance, so that when it is necessary to develop an embedded Linux application program, users just need to design their required application program only. If there is any problem occurred in the electronic device, users just need to check if there is anything wrong with the application program without the need of checking the Linux operating system core and the root file system. The present invention can save lots of time and costs for users.

### BRIEF DESCRIPTION OF THE DRAWINGS

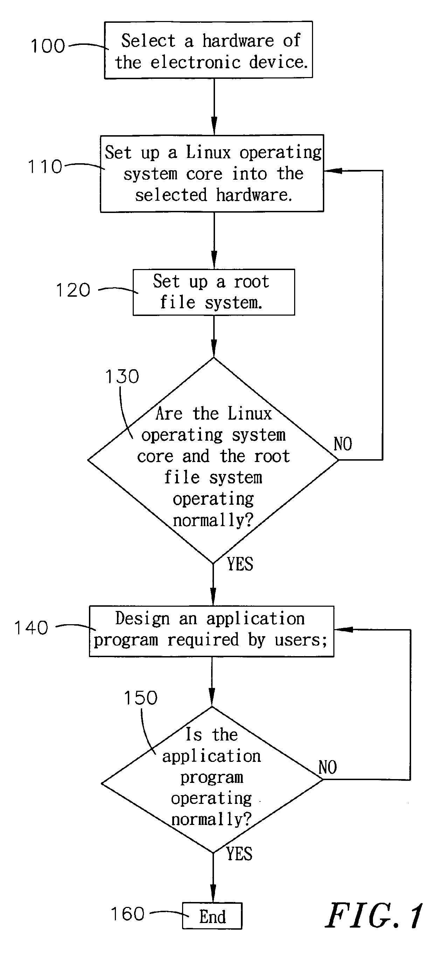

FIG. 1 is a flow chart of setting up an embedded Linux operating system according to the present invention.

### DETAILED DESCRIPTION OF THE PREFERRED EMBODIMENT

Referring to Fig. 1 for the flow chart of setting up an embedded Linux operating system according to the present invention. In general, the procedure for a user to install an embedded Linux operating system into an electronic device comprises the steps of:
Step 100: selecting a hardware of the electronic device such as a microprocessor, an interface card or other device;
Step 110: setting up a Linux operating system core into the selected hardware;
Step 120: setting up a root file system;
Step 130: testing whether or not the Linux operating system core and the root file system operate normally; if yes, then go to Step 140, otherwise go to Step 110;
Step 140: designing an application program required by users;
Step 150: testing whether or not the application program operates normally; if yes, then go to Step 160, otherwise go to Step 140.
Step 160: ending the procedure.

In view of the description above, if a user installs the embedded Linux operating system into an electron device, it is necessary to set up the Linux operating system core and the root file system first. Therefore, if there is a problem in the setup, the user must determine whether or not there is a problem in the Linux operating system core and the root file system. Such arrangement wastes lots of time, and different users may have all kinds of problems due to their different setups.

However, mass production is generally used by electronic device manufacturers for producing their products, and same setup of the Linux operating system core and root file system can be applied to the same electronic product. Therefore, the present invention sets up the Linux operating system core and the root file system into an electronic product before the product is delivered to users. Further, the electronic product includes a microprocessor for processing the Linux operating system core and the root file system, so that when a user wants to develop an embedded Linux application program, the user just needs to design the required application program only. Since the manufacturer has already tested the Linux operating system core and root file system in advance, therefore the user just needs to check the application program when the electronic device experiences a problem. There is no need for the user to check the Linux operating system core and the root file system, and thus the present invention can save lots of user's time and costs. Further, manufacturers just need to set up the electronic device once for all without consuming too much time and efforts.

In summation of the description above, the electronic device having an embedded Linux application system in accordance with the present invention can overcome the shortcomings of the prior art, and the key point resides on applying the setup of the Linux operating system core and root file system to the electronic device, and the electronic product comprises a microprocessor for processing the Linux operating system core and the root file system, such that if a user wants to develop an embedded Linux application program, the user just needs to design the required application program only. When there is a problem occurred in the electronic device, the user just needs to check the application program without the need of checking the Linux operating system core and the root file system. Therefore, the present invention can save lots of time and costs for users.

While the invention has been described in conjunction with a specific best mode, it is to be understood that many alternatives, modifications and variations will be apparent to those skilled in the art in light of the foregoing description. Accordingly, it is intended to embrace all such alternatives, modifications and variations in which fall within the spirit and scope of the included claims. All meters set forth herein or shown in the accompanying drawings are to be interpreted in an illustrative and non-limiting.

## Claims

1. An electronic device with an embedded Linux application system, comprising a microprocessor for processing a setup of a Linux operating system core and a root file system, and said electronic device installs said Linux operating system core and said root file system, thereby users just need to design their required application program when developing an embedded Linux application program.
